Europäisches Patentamt

**European Patent Office**

Office européen des brevets

(11) Veröffentlichungsnummer: **0 092 251**
**B1**

(12) **EUROPÄISCHE PATENTSCHRIFT**

(45) Veröffentlichungstag der Patentschrift:
**27.11.85**

(21) Anmeldenummer: **83103867.4**

(22) Anmeldetag: **20.04.83**

(51) Int. Cl.⁴: **F 24 D 11/02, F 24 J 2/42**

(54) Einrichtung zur Umsetzung von Sonnenenergie in Wärme.

(30) Priorität: **21.04.82 DE 3214843**
**12.11.82 DE 3241925**

(43) Veröffentlichungstag der Anmeldung:
**26.10.83 Patentblatt 83/43**

(45) Bekanntmachung des Hinweises auf die Patenterteilung:
**27.11.85 Patentblatt 85/48**

(84) Benannte Vertragsstaaten:
**AT BE CH DE FR GB IT LI LU NL SE**

(56) Entgegenhaltungen:
**EP - A - 0 025 212**
**EP - A - 0 054 729**
**DE - A - 2 919 957**
**DE - A - 2 932 799**
**DE - A - 3 008 815**
**DE - A - 3 214 843**
**GB - A - 2 000 273**
**US - A - 4 227 515**

(73) Patentinhaber: **Kirchmayer, Hermann, Dorfstrasse 18a,**
**D-8121 Antdorf (DE)**

(72) Erfinder: **Kirchmayer, Hermann, Dorfstrasse 18a,**
**D-8121 Antdorf (DE)**

(74) Vertreter: **Patentanwälte Leinweber & Zimmermann,**
**Rosental 7/II Aufg., D-8000 München 2 (DE)**

ACTORUM AG

## Beschreibung

Die Erfindung bezieht sich auf eine Einrichtung zur Umsetzung von Sonnenenergie in Wärme gemäss dem Oberbegriff des Anspruches 1.

Bei einer derartigen Einrichtung, die zum internen Stand der Technik gehört PDE-A-3214843, veröffentlicht am 8.7.82, ist die unterhalb der Abdeckung des der Sonne zugewandten Kanals befindliche Kammer an ihrem oberen Ende mit einer durch eine temperaturabhängig steuerbare Klappe verschliessbaren Öffnung versehen, d.h. einer Öffnung, die lediglich bei Betriebsweise des Kanals als Kollektor, oberhalb einer bestimmten Mindesttemperatur in geschlossenem Zustand gehalten wird. Wird die Mindesttemperatur unterschritten und die obere Öffnung durch Verschwenkung der steuerbaren Klappe geöffnet, dann arbeitet der Kanal als Absorber, und die Umgebungsluft kann durch die Kammer hindurchströmen.

Es hat sich gezeigt, dass die den Kollektorenelementen jeweils zugeordneten, der Witterung mehr oder weniger stark ausgesetzten Klappen, um eine einwandfreie Funktion zu gewährleisten, in aufwendiger Weise einer besonders präzisen Ausbildung bedürfen und Wartungsarbeiten nicht völlig vermeidbar sind.

An dieser Stelle ist zu erwähnen, dass aus der DE-A 2932799 eine wahlweise als Kollektor oder Absorber arbeitende Einrichtung zur Umsetzung von Sonnenenergie in Wärme bekannt ist, bei der dem eigentlichen Kollektor eine Abdeckung in Form einer Mehrzahl von um eine Drehachse schwenkbarer Lamellen zugeordnet ist, deren Umsteuerung von Kollektor- auf absorberbetrieb in Abhängigkeit von den jeweiligen Witterunsbedingungen erfolgt.

Eine ähnliche Umsteuerung der jeweiligen Betriebsstellung von einem Kollektor zugeordneten Schliessklappen ist Gegenstand der DE-A 2919957. Auch hier sind die erwähnten Nachteile gegeben.

Der Erfindung liegt die Aufgabe zugrunde, die Einrichtung der genannten Art so weiter auszubilden, dass eine zufriedenstellende Arbeitsweise der Kollektorelemente sowohl als Kollektor als auch als Absorber gewährleistet ist, ohne dass zum Zwecke der Änderung dieser Betriebsweisen der Kollektorelemente letztere mit die Störungsanfälligkeit erhöhenden mechanisch beweglichen Klappen oder dergleichen ausgerüstet zu sein brauchen.

Die Einrichtung nach der Erfindung, bei der diese Aufgabe gelöst ist, zeichnet sich durch die im kennzeichnenden Teil des Anspruches 1 herausgestellten Merkmale aus.

Bei Absorber-Betriebsweise wird die mit dem Kanal in Berührung stehende Luft durch das dem Kanal vom Niedertemperaturspeicher zugeführte, relativ kalte Wärmeträgerfluid abgekühlt. Die somit relativ dichtere, schwerere Luft strömt am Kanal entlang und tritt aus der Kammer durch den kanalnahen Schlitz aus. Die vergleichsweise wärmere Umgebungsluft tritt durch den dem Kanal abgelegenen Schlitz in die Kammer ein und strömt im Bereich der transparenten Abdeckung aufwärts. Trotz oben geschlossener Ausbildung der Kammer kommt es somit bei Betrieb des Kanals als Absorber zu dem erforderlichen Luftaustausch. Die Berücksichtigung der Strahlungsintensität einerseits und der Aussentemperatur andererseits stellt dabei sicher, dass bei Erreichen optimaler Erwärmungsbedingungen für das Wärmeträgerfluid die Umsteuerung vom Niedertemperaturspeicher-Zweig auf den Hochtemperaturspeicher-Zweig vorgenommen wird, und umgekehrt. Im ersten Fall sorgt der vorübergehende Pumpenstillstand für eine ausreichende Erwärmung des Kanals und der in der Kammer befindlichen Luft, damit diese eine Temperatur erreicht, bei der sie spezifisch leichter als die Umgebungsluft ist und nicht mehr aus der Kammer ausströmen kann.

Die Erfindung basiert somit auf der Erkenntnis, dass es eines Öffnens des oberen Abschlusses der Kammer während des Betriebs als Absorber nicht bedarf, wenn auf andere Weise, nämlich durch die Schlitzanordnung für die erforderliche Luftzirkulation gesorgt wird, und wenn ferner beim Übergang vom Absorberbetrieb auf Kollektorbetrieb durch vorübergehendes Ausserbetriebsetzen der Umwälzpumpe eine Beruhigung und schnelle Erwärmung der in der Kammer befindlichen Luftsäule herbeigeführt wird.

Diese könnte auf einfache Weise durch zeitabhängige Pumpenstillsetzung erfolgen; genauere Ergebnisse werden jedoch gemäss einer bevorzugten Ausführung der Erfindung durch die im Anspruch 2 herausgestellten Merkmale erzielt. Bei plötzlichem starkem Energieeinfall wird die das Wiedereinschalten der Pumpe auslösende Temperaturdifferenz schneller herbeigeführt als bei langsamen Anstieg der Strahlungsenergie. Somit ist in besonders günstiger Weise eine Anpassung an die jeweils gegebenen verhältnisse möglich.

Die zum Einsatz gelangenden Kollektorelemente sind in herkömmlicher Weise mit einer den Kanal tragenden Kunststoffbasis versehen. Liegt der Kanal wie üblich an dieser Kunststoffbasis mit seiner einen Seite an, dann findet der Wärmeaustausch zwischen der in der Kammer zirkulierenden Luft und dem Kanal bei Absorberbetrieb nur an dessen oberseite statt. Ein besonders wirksamer Wärmeaustausch lässt sich in weiterer Ausgestaltung der Erfindung dadurch erzielen, dass zwischen dem Kanal und der Basis eine bei Absorberbetrieb den Luftaustausch durchvermehrte Luftzirkulation begünstigende schmale Nebenkammer vorgesehen ist. Zweckmässigerweise sind dem Kanal oder der Basis dabei schmale Stege zugeordnet, über die sie sich aufeinander abstützen. Die Nebenkammer läuft zweckmässigerweise an ihrem unteren Ende in den kammernahen Schlitz aus.

Als sehr vorteilhaft hat es sich erwiesen, wenn die transparente Abdeckung aus zwei sich im Abstand und etwa parallel zueinander erstreckenden Abdeckungsplatten besteht, die in ihrem Randbereich miteinander verbunden sind und einen geschlossenen Raum begrenzen. Auf diese Weise wird eine Isolierung der Kammer nach aussen erzielt und die Wärmeabfuhr durch die transparente Abdeckung hindurch bei stehender erwärmter Luftsäule während des Kollektorbetriebs verringert.

Alternativ kann die transparente Abdeckung gemäss einer weiteren Ausführungsform auch aus zwei sich im Abstand und etwa parallel zueinander erstreckenden Abdeckungsplatten bestehen, die den kanalferner Schlitz begrenzen und an ihrer Oberseite eine in der Kammer mündende Öffnung definieren. In diesem Fall bilden die parallel zueinander verlaufenden Abdeckungsplatten einen Führungskanal für die durch den kanalferner Schlitz eintretende Umgebungsluft bis zum oberen Kammerbereich hin, von dem aus die Luft unter Wärmeentzug durchbeide Kanaloberflächen an letzteren abwärts fliesst, um schliesslich aus dem kanalnahen Schlitz auszutreten.

Weitere Einzelheiten, Vorteile und Merkmale der Erfindung ergeben sich aus der folgenden Beschreibung und der Zeichnung, auf die bezüglich aller nicht im text beschriebenen Einzelheiten ausdrücklich verwiesen wird. Es zeigen:

Fig. 1 eine schematische Darstellung der Einrichtung nach der Erfindung,

Fig. 2 einen Vertikalschnitt durch eine erste Ausführungsform eines zum Einsatz gelangenden Kollektorelements,

Fig. 3 einen Vertikalschnitt durch eine abgewandelte Ausführungsform des Kollektorelements nach Fig. 2.

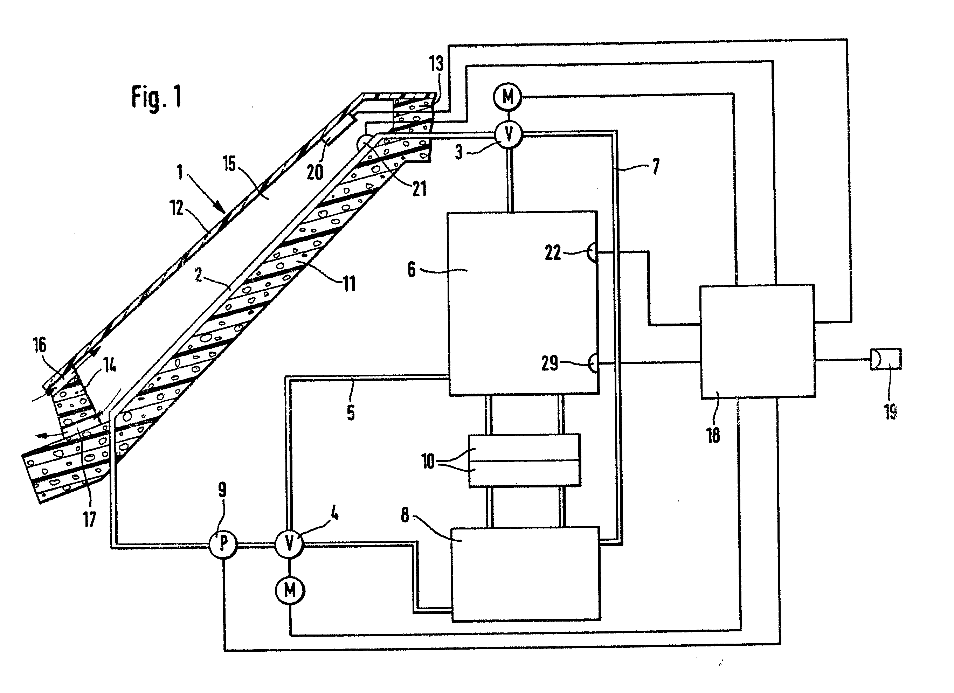

In Fig. 1 der Zeichnung ist die Einrichtung in ihrer einfachsten Ausführungsmöglichkeit schematisch veranschaulicht, nämlich mit nur einem einzigen Kollektorelement 1, dessen Wärmeträgerfluid-Kanal 2 nicht mit weiteren gleichartigen Elementen, sondern unmittelbar über Umsteuerventile 3 und 4 mit einem ersten Zweig 5, der einen Hochtemperaturspeicher 6 enthält, oder einem zweiten Zweig 7, der einen Niedertemperaturspeicher 8 enthält, verbunden ist. In den Leitungszug zwischen Kanal 2 und Umsteuerventil 4 ist ferner eine Wärmeträgerfluid-Umwälzpumpe 9 eingeschaltet. Der Niedertemperaturspeicher 8 ist mit dem Hochtemperaturspeicher 6 über eine Wärmepumpe 10 verbunden.

Der Kanal 2 des Kollektorelementes 1 ist auf einer isolierenden Kunststoffbasis 11 angeordnet. Im Abstand befindet sich oberhalb des Kanals 2 eine lichtdurchlässige Abdeckung 12. Sie stützt sich auf einem oberen Vorsprung 13 und einem unteren Vorsprung 14 der Kunststoffbasis 11 ab. Durch den oberen Vorsprung 13 ist die von der Abdeckung 12 und dem Kanal 2 begrenzte Kammer 15 nach oben hin abgeschlossen. An ihrem unteren Ende ist der Kammer im Vorsprung 14 ein kanalferner erster Schlitz 16 und ein dem Kanal benachbarter zweiter Schlitz 17 zugeordnet.

An die in Bezug auf die Horizontale unter einem Winkel von 45° bis 60° geneigte Kunststoffbasis 11 mit Kanal 2 schliesst sich eine sich quer zur Basis 11 erstreckende, in Fig. 1 nicht näher veranschaulichte Basis für einen mit der Umgebungsluft in Berührung stehenden, ebenfalls nicht veranschaulichten Kanal an.

Dem veranschaulichten Kollektorelement 1 ist ein Steuergerät 18 zugeordnet, dass die sich beim messen der Aussentemperatur mit Hilfe des Temperaturfühlers 19 ergebenden Werte in elektrische Signale entsprechender Grösse umsetzt. Dies geschieht ebenfalls mit den Werten, die sich bei Messung der Intensität der auf den Kanal auftreffenden Strahlungsenergie mittels einer unterhalb der Abdeckung 12 angeordneten Fotozelle 20 ergeben. Vom Steuergerät 18 werden ferner die Messwerte eines dem Kanal 2 zugeordneten Temperaturfühlers 21 sowie eines im Hochtemperaturspeicher 6 vorgesehenen Temperaturfühlers 22 registriert und zur Steuerung der Einrichtung verarbeitet.

Dies geschieht auf folgende Weise:

Das Steuergerät 18 setzt die sich bei Messung der Aussentemperatur sowie der Intensität der auf den Kanal 2 auftreffenden Strahlungsenergie ergebenden Werte in elektrische Signale entsprechender Grösse um, summiert letztere und setzt, sobald die Signalsumme einen vorbestimmten Signalwert überschreitet, die Umwälzpumpe 9 solange ausser Betrieb, bis die Differenz der Messwerte des dem Kanal 2 zugeordneten Temperaturfühlers 21 und des im Hochtemperaturspeicher 6 vorgesehenen Temperaturfühlers 22 einen vorbestimmten Wert überschreitet, um dann auch mit Hilfe der Umsteuerventile 3 und 4 vom zweiten Zweig, der den Niedertemperaturspeicher 8 enthält, auf den den Hochtemperaturspeicher 6 enthaltenden ersten Zweig 5 umzuschalten. Wenn die Signalsumme der der Aussentemperatur und der Strahlungsenergie entsprechenden elektrischen Signale den vorbestimmten Signalwert unterschreitet, veranlasst das Steuergerät eine Rückschaltung der Umsteuerventile 3 und 4 auf den den Niedertemperaturspeicher 8 enthaltenden zweiten Zweig 7.

Bei Betriebsweise des Kanals 2 als Absorber, bei der der Kanal mit dem Niedertemperaturspeicher 8 in Verbindung steht, wird die in unmittelbarer Nähe des Kanals 2 befindliche Luft abgekühlt. Aufgrund der sich ergebenden höheren Dichte strömt die Luft auf die durch Pfeile angedeutete Weise abwärts und tritt durch den zweiten Schlitz 17 aus der Kammer 15 aus. Durch den Schlitz 16 strömt ebenfalls in Pfeilrichtung die entsprechende Menge Frischluft zu. Bei entsprechender Zunahme der Intensität der auf den Kanal 2 auftreffenden Strahlungsenergie sorgt das Steuergerät 18 für einen Stillstand der Umwälzpumpe 9 und damit für eine beschleunigte Erwärmung des im Kanal 2 befindlichen Wärmeträgerfluids sowie der in der Kammer 15 befindlichen Luft. Letztere kommt somit praktisch ebenfalls zum Stillstand. Da sie spezifisch leichter als die Umgebungsluft ist, hört die Zirkulation und damit der Austausch durch die Schlitze 16 und 17 auf. Sobald die erwähnte Temperaturdifferenz zwischen den Temperaturfühlern 21 und 22 erreicht ist, sorgt das Steuergerät für eine Umsteuerung der Umschaltventile 3 und 4 in einer solchen Weise, dass der erste Zweig 5 mit dem Hochtemperaturspeicher 6 angeschlossen ist, und gleichzeitig beginnt die Umwälzpumpe 9 wieder zu arbeiten, so dass der Kanal 2 nunmehr als Kollektor tätig ist. Diese Arbeitsweise hält an, bis die eingangs erwähnte Signalsumme, die von der gemessenen Aussentemperatur und der gemessenen Intensität der auf den Kanal auftreffenden Strahlungsenergie abhängt, den im Steuergerät 18 vorbestimmten Signalwert unterschreitet.

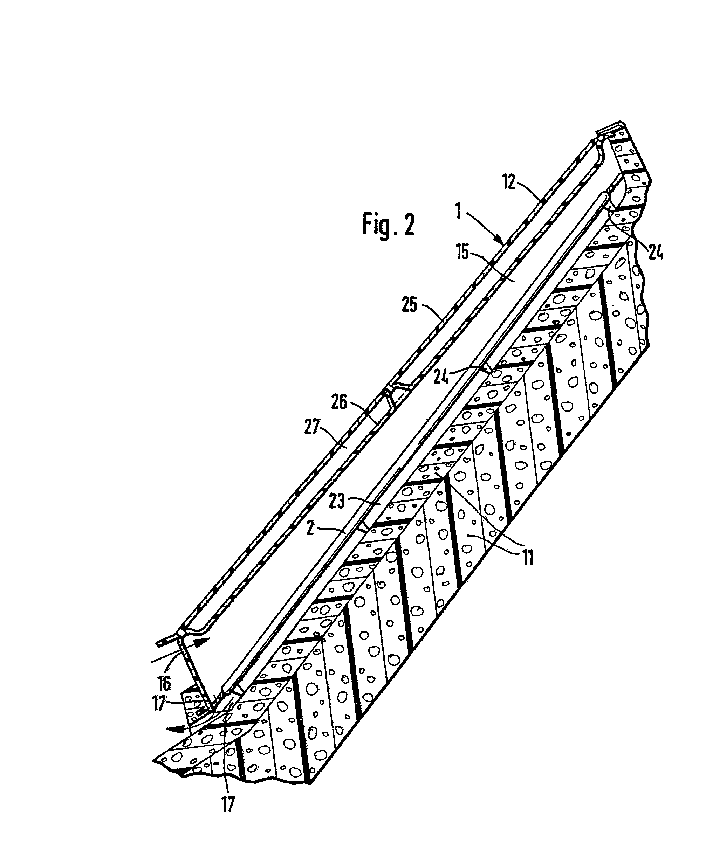

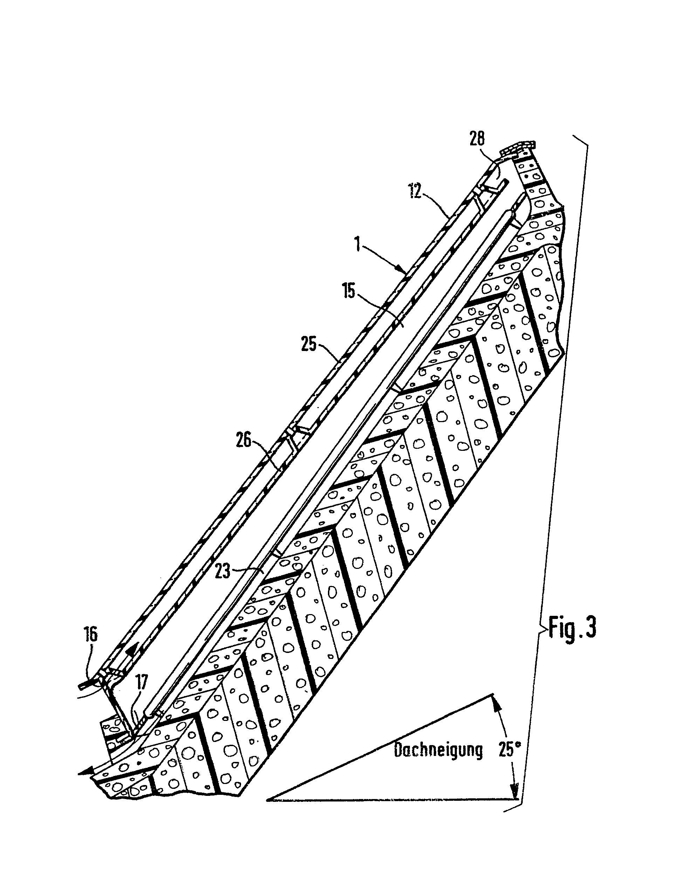

Aus den Fig. 2 und 3 geht eine insofern gegenüber der Ausführungsform nach Fig. 1 abgewandelte Ausgestaltung des Kollektorelementes 1 hervor, als bei diesen zwischen dem Kanal 2 und der Basis 11 eine bei Absorberbetrieb den Luftaustausch durch beschleunigte Luftzirkulation begünstigende schmale Nebenkammer 23 vorgesehen ist. Zu diesem Zweck sind dem Kanal 2 oder der Basis 11 schmale Stege 24 zugeordnet, über die sie sich aufeinander abstützen. Die Nebenkammer 23 läuft an ihrem unteren Ende in den kammernahen Schlitz 17 aus.

Bei den beiden Ausführungsformen nach den Fig. 2 und 3 besteht die transparente Abdeckung 12 aus zwei sich im Abstand und etwa parallel zueinander erstreckenden Abdeckungsplatten 25 und 26. Diese sind bei der Ausführungsform nach Fig. 2 in ihrem Randbereich miteinander verbunden und begrenzen einen geschlossenen Raum 27. Bei der Ausführung nach Fig. 3 begrenzen die Abdeckungsplatten 25 und 26 mit ihren unteren Rändern den kanalfernen ersten Schlitz 16. An ihrer oberseite definieren sie eine in der Kammer 15 mündende Öffnung 28.

Aus der Zeichnung ist ersichtlich, dass der Querschnitt der Kammer 15 bei sämtlichen Ausführungsformen zwischen Abdeckung 12 und Kanal 2 zum oberen geschlossenen Ende hin abnimmt.

Um im Sommer Überhitzungen zu vermeiden, kann dem Hochtemperaturspeicher ein Sicherheitsthermostat 29 zugeordnet sein, der mit dem Steuergerät 18 in Verbindung steht und bei Erreichen einer Temperatur von beispielsweise 90° C für eine Umschaltung der Umsteuerventile 3 und 4 sorgt, so dass der Zweig 7 mit dem Niedertemperaturspeicher 8 an den als Kollektor arbeitenden Kanal 2 angeschlossen wird. In Gebieten, in denen die Gefahr extrem hoher Temperaturen besteht, kann abweichend von dem Kreislauf nach Fig. 1 zusätzlich eine vom Sicherheitsthermostat 29 gesteuerte Verbindungsmöglichkeit der Umschaltventile 3 und 4 unter Umgehung beider Speicher 6 und 8 vorgesehen sein.

## Patentansprüche

1. Einrichtung zur Umsetzung von Sonnenenergie in Wärme, mit einem Sonnenkollektor aus einer Mehrzahl von miteinander kuppelbaren, an ein Wärmeträgerfluidnetz anschliessbaren Kollektorelementen (1), die jeweils einen ersten der Sonne zugewandten, unterhalb einer lichtdurchlässigen Abdeckung (12) liegenden Wärmeträgerfluid-Kanal (2) mit einem ihm zugeordneten Wärmeträgerfluid-Umwälzpumpe (9) und gegebenenfalls einen zweiten, quer zum ersten Kanal ausgerichteten, mit der Umgebungsluft in Berührung stehenden Kanal umfassen, wobei in der von der Abdeckung (12) und dem der Sonne zugewandten ersten Kanal (2) begrenzten Kammer (15) in seiner ersten Betriebsstellung, in der der als Kollektor arbeitende erste Kanal (2) mit einem einen Hochtemperaturspeicher (6) enthaltenden ersten Zweig (5) verbunden ist, ein oberer Abschluss vorgesehen und eine Frischluftzirkulation unterbunden und in einer zweiten Betriebsstellung, in der der erste Kanal (2) als Absorber arbeitet und in Abhängigkeit von einer mittels eines Temperaturfühlers (19) festgestellten Temperatur über ein Umsteuerventil (3, 4) vom ersten Zweig (5) getrennt und an einen zweiten Zweig (7) mit einem Niedertemperaturspeicher (8) angeschlossen ist, ein Luftaustausch mit der Aussenluft ermöglicht ist, dadurch gekennzeichnet, dass der Kammer (15), die an ihrem oberen Ende geschlossen ausgebildet ist, ein erster kanalferner Schlitz (16), der dem Lufteintritt in die Kammer (15) dient, und ein dem Luftaustritt dienender, dem ersten Kanal (2) benachbarter zweiter Schlitz (17) am unteren Ende der Kammer (15) zugeordnet ist und dass der Umwälzpumpe (9) ein Steuergerät (18) zugeordnet ist, das für eine Förderung des Wärmeträgerfluids in Abhängigkeit sowohl von der Aussentemperatur als auch der Intensität der auf den Kanal (2) auftreffenden Strahlungsenergie vom Kanal entweder zum Hochtemperaturspeicher (6) (Kollektorbetrieb) oder zum Niedertemperaturspeicher (8) (Absorberbetrieb) sorgt und das beim Übergang vom Absorber- zum Kollektorbetrieb einem vorübergehenden Stillstand der Pumpe (9) herbeiführt.

2. Einrichtung nach Anspruch 1, dadurch gekennzeichnet, dass das Steuergerät (18) einmal die sich bei Messung der Aussentemperatur sowie der Intensität der auf den Kanal (2) auftreffenden Strahlungsenergie ergebenden Werte in elektrische Signale entsprechender Grösse umsetzt, letztere summiert und, sobald die Signalsumme einen vorbestimmten Signalwert überschreitet, die Umwälzpumpe (9) solange ausser Betrieb setzt, bis die Differenz der Messwerte eines dem Kanal bzw. der Gruppe von zusammengeschalteten Kanälen zugeordneten Temperaturfühlers (21) und eines im Hochtemperaturspeicher (6) vorgesehenen Temperaturfühlers (22) einen vorbestimmten Wert überschreitet, worauf mittels dem Kanal eingangs- und ausgangsseitig jeweils zugeordneter Umsteuerventile (3, 4) eine Umschaltung vom zweiten Zweig (7) auf den den Hochtemperaturspeicher (6) enthaltenden ersten Zweig (5) erfolgt und zum anderen eine Rückschaltung der Umsteuerventile (3, 4) auf den den Niedertemperaturspeicher (8) enthaltenden zweiten Zweig (7) veranlasst, sobald die Signalsumme der der Aussentemperatur und der Strahlungsenergie entsprechenden elektrischen Signale den vorbestimmten Signalwert unterschreitet.

3. Einrichtung nach Anspruch 2, gekennzeichnet durch eine derartige Regelung der Förderleistung der Umwälzpumpe (9), dass die von der Speichertemperaturabhängige Temperaturdifferenz solange aufrechterhalten wird, wie das Produkt aus Wärmegewinn mal Durchflussmenge über dem Wert liegt, der bei Wärmepumpenbetrieb erreichbar wäre.

4. Einrichtung nach einem der Ansprüche 1 bis 3, mit einer den Kanal (2) tragenden Kunststoffbasis (11), dadurch gekennzeichnet, dass zwischen dem Kanal (2) und der Basis (11) eine bei Absorberbetrieb den Luftaustausch durch vermehrte Luftzirkulation begünstigende schmale Nebenkammer (23) vorgesehen ist, die an ihrem unteren Ende in den kammernahen Schlitz (17) ausläuft.

5. Einrichtung nach einem der Ansprüche 1 bis 4, dadurch gekennzeichnet, dass die transparente Abdeckung (12) aus zwei sich im Abstand und etwa parallel zueinander erstreckenden Abdeckungsplatten (25, 26) besteht, die in ihrem Randbereich miteinander verbunden sind und einen geschlossenen Raum (27) begrenzen.

6. Einrichtung nach einem der Ansprüche 1 bis 4, dadurch gekennzeichnet, dass die transparente Abdeckung (12) aus zwei sich im Abstand und etwa parallel zueinander erstreckenden Abdeckungsplatten (25, 26) besteht, die den kanalfernen Schlitz (16) begrenzen und an ihrer oberseite eine in der Kammer (15) mündende Öffnung (28) definieren.

## Claims

1. Device for the conversion of solar energy into heat, with a solar collector comprising a plurality of collector elements (1) which can be coupled to one another, which are connectable to a heat carrier fluid ducting system, and which each comprise a first heat carrier fluid duct (2) with a heat carrier fluid circulation pump (9) associated therewith, said duct being directed towards the sun and being situated below a light-pervious cover (12), and possibly a second duct which is aligned transversely with respect to the first duct and which is in contact with the ambient air, wherein in the chamber (15) bounded by the cover (12) and by the first duct (2) facing towards the sun in a first operating position in which the first duct (2), operating as a collector, is connected to a first branch (5) including a high-temperature storage unit (6) a top-end closure is provided and fresh air circulation is inhibited, and in a second operating position in which the first duct (2) operates as an absorber and in dependence on a temperature ascertained by means of a temperature sensor (19) is, by means of a change-over valve (3, 4), separated from the first branch (5) and connected to a second branch (7) having a low-temperature storage unit (8), air exchange with the ambient air is allowed, characterised in that there are associated with the chamber (15), which is constructed closed at its upper end, a first slot (16) which is remote from the duct and which serves for the entry of air into the chamber (15), and a second slot (17) at the lower end of the chamber (15) which second slot is situated in the vicinity of the first duct (2) and serves for the outflow of air, and that there is associated with the circulation pump (9) a control unit (18) which provides for feeding the heat carrier fluid, in dependence both on the outside temperature and also on the intensity of the radiation energy impinging on the duct (2), from the duct either to the high-temperature storage unit (6) (collector operation) or to the low-temperature storage unit (8) (absorber operation) and which at change-over from absorber to collector operation brings about a temporary stopping of the pump (9).

2. Device according to claim 1, characterised in that the control unit (18) on the one hand converts into electrical signals of appropriate magnitude the values obtained on measurement of the outside temperature and the intensity of the radiation energy impinging on the duct (2), sums the said electrical signals and, as soon as the signal sum exceeds a predetermined signal value, renders the circulation pump (9) inoperative until the difference between the measurement values of a temperature sensor (21) associated with the duct or a group of inter-connected ducts and of a temperature sensor (22) provided in the high-temperature storage unit (6) exceeds a predetermined value, whereupon by means of change-over valves (3, 4) associated with the duct at the entry and outflow sides respectively a change-over is effected from the second branch (7) to the first branch (5) including the high-temperature storage unit (6), and on the other hand causes a changing-back of the change-over valves (3, 4) to the second branch (7) including the low-temperature storage unit (8) as soon as the sum of the electrical signals corresponding to the outside temperature and the radiation energy goes below the predetermined signal value.

3. Device according to claim 2, characterised by such control of the delivery output of the circulation pump (9) that the temperature difference dependent on the storage unit temperature is maintained as long as the product of heat gain times throughflow quantity is above the value which would be attainable with heat pump operation.

4. Device according to one of claims 1 to 3, with a synthetic plastic base (11) supporting the duct (2), characterised in that a narrow secondary chamber (23) is provided between the duct (2) and the base (11) and promotes air exchange during absorber operation by increased air circulation, said secondary chamber terminating at its lower end in the slot (17) near the chamber.

5. Device according to one of claims 1 to 4, characterised in that the transparent cover (12) comprises two cover plates (25, 26) which are situated in spaced relationship and substantially parallel to one another and which are connected to one another at their edge region and which bound a closed space (27).

6. Device according to one of claims 1 to 4, characterised in that the transparent cover (12) comprises two cover plates (25, 26) which are situated in spaced relationship and substantially parallel with respect to one another and which bound the slot (16) remote from the duct and at their upper end define an aperture (28) opening into the chamber (15).

## Revendications

1. Dispositif pour la conversion d'énergie solaire en chaleur, avec un collecteur solaire se composant d'un certain nombre d'éléments collecteurs (1) pouvant être couplés les uns aux autres, pouvant être raccordés à un réseau de fluide caloporteur, qui comprennent à chaque fois un premier canal de fluide caloporteur tourné vers le soleil, se trouvant en dessous d'un recouvrement transparent à la lumière (12), avec une pompe de recirculation du fluide caloporteur (9) qui lui est affectée et le cas échéant un second canal dirigé transversalement au premier canal, et se trouvant en contact avec l'air environnant, ainsi dans la chambre (15) délimitée par le recouvrement (12) et le premier canal (2) tourné vers le soleil, à sa première position de fonctionnement dans laquelle le premier canal (2) fonctionnant en collecteur est relié à une première ramification (5) contenant un réservoir haute température (6), une fermeture supérieure est prévue et une circulation d'air frais est empêchée et dans une seconde position de fonctionnement, dans laquelle le premier canal (2) fonctionne comme absorbeur et en dépendance d'une température établie au moyen d'un capteur de température (19), se trouve séparé par une vanne d'inversion (3, 4) d'une première ramification (5) et relié à une seconde ramification (7) avec un réservoir basse température (8), un échange de l'air avec l'air externe est possible, caractérisé en ce qu'à la chambre (15), qui est de configuration fermée à son extrémité supérieure, sont affectées une première fente (16) éloignée du canal, qui sert à l'entrée de l'air dans la chambre (15) et une seconde fente (17) servant à la sortie de l'air, qui est voisine du premier canal (2), à l'extrémité inférieure de la chambre et en ce qu'à la pompe de recirculation (9) est affecté un appareil de commande (18), qui provoque une alimentation du fluide caloporteur dépendant aussi bien de la température externe qu'également de l'intensité de l'énergie du rayonnement incident sur le canal (2), du canal soit vers le réservoir haute température (6) (fonctionnement en collecteur) ou bien vers le réservoir basse température (8) (fonctionnement en absorbeur) et qui produit, à la transition du fonctionnement en absorbeur ou collecteur, un arrêt temporaire de la pompe (9).

2. Dispositif selon la revendication 1, caractérisé en ce que l'appareil de commande (18) transforme les valeurs obtenues aussi bien à la mesure de la température externe qu'à l'intensité de l'énergie du rayonnement incident sur le canal (2) en signaux électriques de grandeur correspondante, additionne ces derniers et dès que la somme de signaux a dépassé une valeur prédéterminée de signal, met la pompe de recirculation (9) hors de fonctionnement jusqu'à ce que la différence des valeurs mesurées d'un capteur de température (21) affecté au canal ou respectivement au groupe de canaux raccordés ensemble, et d'un capteur de température (22) prévu dans le réservoir haute température (6) ait dépassé une valeur prédéterminée, et ensuite au moyen des vannes d'inversion (3, 4) affectées du côté entrée et sortie du canal, un changement de la seconde ramification (7) à la première ramification (5) contenant le réservoir haute température (6) se produit et d'autre part un retour des vannes d'inversion (3, 4) à la seconde ramification (7) contenant le réservoir basse température (8) est demandé dès que la somme de signaux des signaux électriques correspondant à la température externe et à l'énergie du rayonnement est passée en dessous de la valeur prédéterminée du signal.

3. Dispositif selon la revendication 2, caractérisé en ce que par une telle régulation de la puissance d'alimentation de la pompe de recirculation (9), la différence de température dépendant de la température des réservoirs est maintenue correcte tant que le produit du rendement de chaleur par le débit se trouve au-dessus de la valeur qui pourrait être atteinte lors d'un fonctionnement d'une pompe à chaleur.

4. Dispositif selon l'une des revendications 1 à 3, avec une base en matière synthétique (11) supportant le canal (2), caractérisé en ce qu'entre le canal (2) et la base (11) est prévue une petite chambre auxiliaire (23) favorisant l'échange de l'air par augmentation de la circulation de l'air lors du fonctionnement en absorbeur, qui débouche, par son extrémité inférieure, dans la fente (17) proche du canal.

5. Dispositif selon l'une des revendications 1 à 4, caractérisé en ce que le recouvrement transparent (12) se compose de deux plaques de recouvrement (25, 26) s'étendant à une certaine distance l'une de l'autre et à peu près parallèlement l'une à l'autre, qui sont reliées l'une à l'autre dans leur zone de bordure et délimitent un espace fermé (27).

6. Dispositif selon l'une des revendications 1 à 4, caractérisé en ce que le recouvrement transparent (12) se compose de deux plaques de recouvrement (25, 26) s'étendant à une certaine distance l'une de l'autre et à peu près parallèlement l'une à l'autre, qui délimitent la fente (16) éloignée du canal et définissent à leur côté supérieur une ouverture (28) débouchant dans la chambre (15).

Fig. 1

Fig. 2

Fig.3

Dachneigung 25°